Europäisches Patentamt

European Patent Office

Office européen des brevets

(11) Veröffentlichungsnummer: **0 291 661 B1**

(19)

(12) **EUROPÄISCHE PATENTSCHRIFT**

(45) Veröffentlichungstag der Patentschrift: **06.05.92**

(21) Anmeldenummer: **88104704.7**

(22) Anmeldetag: **24.03.88**

(51) Int. Cl.⁵: **B64D 13/04**, B64C 1/12, B64C 1/18

(54) **Dekompressionspaneel.**

(30) Priorität: **08.05.87 DE 3715328**

(43) Veröffentlichungstag der Anmeldung:
**23.11.88 Patentblatt 88/47**

(45) Bekanntmachung des Hinweises auf die
Patenterteilung:
**06.05.92 Patentblatt 92/19**

(84) Benannte Vertragsstaaten:
**FR GB IT NL**

(56) Entgegenhaltungen:
**GB-A- 2 010 398**
**US-A- 2 613 402**
**US-A- 4 049 221**
**US-A- 4 390 152**

**Aviation Week and Space Technology,
08.12.75, S. 32-36**

**Flight International, 04.12.76, S 1644-1659**

(73) Patentinhaber: **Deutsche Airbus GmbH
Kreetslag 10
W-2103 Hamburg 93(DE)**

(72) Erfinder: **Hararat-Tehrani, Mohammad
Adam-Stegerwald-Strasse 47
W-2800 Bremen 41(DE)**
Erfinder: **Schwarz, Frank
Rotdornweg 39
W-2850 Bremerhaven(DE)**
Erfinder: **Taddiken, Michael
Sulinger Strasse 19
W-2830 Bassum(DE)**

Rank Xerox (UK) Business Services
(3.08/2.18/2.0)

## Beschreibung

Die Erfindung bezieht sich auf ein Dekompressionspanel für Zwischenwände und Zwischenböden von Passagier- und Frachträume aufweisenden Luftfahrzeugen, bestehend aus einer mit einer Dichtung in eine Dekompressionsöffnung einsetzbaren Sandwichplatte und mehreren gleichmäßig verteilten Halte- und Klemmvorrichtungen.

Explosive Dekompressionen können bei Luftfahrzeugen auftreten, wenn diese in Höhen fliegen, in denen ein merklich niedrigerer Luftdruck herrscht als in Bodennähe. In den Rümpfen solcher Luftfahrzeuge ist es notwendig Luftverhältnisse zu schaffen, wie in Bodennähe, so daß im Rumpf gegenüber dem Außenbereich ein Überdruck entsteht. Die bekannten Luftfahrzeuge besitzen neben dem Passagierraum auch einen Frachtraum, der durch einen Zwischenboden vom Passagierraum getrennt ist. Außerdem kann der Frachtraum noch durch besondere Verkleidungswände abgedichtet sein. Zwischen beiden Räumen ist es notwendig ein Druckausgleichssystem zu installieren, da eine explosive Dekompression sonst zur Zerstörung des Zwischenbodens und darin verlegter Steuersysteme führen kann.

Bei einem bekannten Druckausgleichssystem sind Dekompressionsöffnungen in der Frachtraumverkleidung und im Zwischenboden vorgesehen, die mit Dekompressionspanels in Sandwichbauweise verschließbar sind. Das Dekompressionspanel wird dabei mit einem einseitigen Steg und Verschlüssen in der Dekompressionsöffnung gehalten, wobei ein auf den Steg aufgeklebtes Dichtband für eine Abdichtung sorgt. Für die Verschlüsse sind federbelastete und angespitzte Stifte vorgesehen, die in speziellen am Dekompressionspanel angebrachten Gehäusen geführt sind. Bei einem bestimmten Differenzdruck werden entweder die Verschlüsse oder die am Dekompressionspanel angeformten Stege überdrückt. so daß z.B. bei einer explosiven Dekompression das Panel aus der Dekompressionsöffnung gedrückt wird. Bei diesem Dekompressionspanel ist unbefriedigend, daß das Auslösen einer Dekompression in einer Richtung nicht über die Verschlüsse sondern über die Durchbiegung der Stege erfolgt, was keinen hinreichend engen Differenzdruckbereich für das Ansprechen bedeutet. Außerdem können sich die Stege bei einem Brand im Frachtraum verformen und damit die Abdichtung der Dekompressionsöffnung beeinträchtigen, mit der Folge, daß Frischluft nachströmt und den Brand unterstützt.

Ein ähnliches Dekompressionspanel ist vom GB-A-2 010 398 bekannt.

Der Erfindung liegt daher die Aufgabe zugrunde ein Dekompressionspanel der eingangs genannten Art vorzusehen, das mit einfachen Halte- und Klemmvorrichtungen in der Lage ist auf definierte Differenzdruckbereiche anzusprechen und bei dem die Abdichtung bei einem Brand im Frachtraum über einen hinreichenden Zeitraum gewährleistet bleibt. Diese Aufgabe ist gemäß der Erfindung dadurch gelöst, daß das Dekompressionspanel in einen Rahmen eingesetzt ist, der auf einer Seite einen Flansch aufweist, daß der Flansch mit Dichtungen sowohl am Dekompressionspanel als auch an der Wand- oder Bodenplatte im Luftfahrzeug in einer die Dichtung schützenden Weise anliegt, und daß an der anderen Seite des Rahmens mehrere das Dekompressionspanel und die Wand- oder Bodenplatte übergreifende Haltefedern mit Sollbruchstellen angebracht sind.

Das erfindungsgemäße Dekompressionspanel hat den Vorteil, daß für das Ansprechen in beiden Richtungen definierte Differenzdruckbereiche durch entsprechende Bemessung der mit den Sollbruchstellen versehenen Haltefedern vorgebbar sind. Außerdem gewährt die Art der Abdichtung einen hinreichend langen Verschluß der Dekompressionsöffnung auch im Brandfall, so daß ein Flugzeug auch bei einem Brand im Frachtraum noch sicher gelandet werden kann.

Weiterbildungen und vorteilhafte Ausgestaltungen der Erfindung sind in den Ansprüchen 2 bis 7 angegeben.

Die Erfindung wird anhand der Zeichnung näher erläutert. Es zeigen:

Fig. 1a      ein erstes Ausführungsbeispiel eines in eine Wand eingesetzten Dekompressionspanels,

Fig. 1b      einen vergrößerten Schnitt Ib-Ib gemäß Fig. 1a,

Fig. 2a/b      eine vergrößerte Darstellung einer Haltefeder,

Fig. 3a      ein zweites Ausführungsbeispiel für ein in eine Wand eingesetztes Dekompressionspanel,

Fig. 3b      einen vergrößerten Schnitt IIIb-IIIb gemäß Fig. 3a,

Fig. 4a/b      eine vergrößerte Darstellung einer weiteren Haltefeder und

Fig. 5a/b      zwei mögliche Dekompressionsvorgänge in einem Luftfahrzeug.

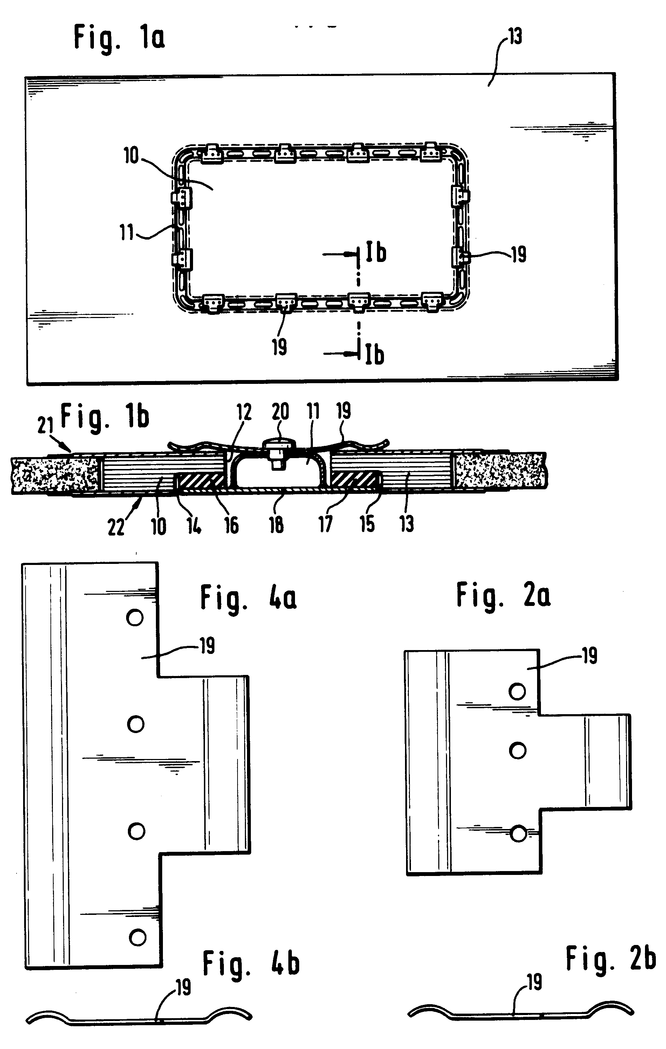

Wie die Darstellungen nach Fig. 1a/b zeigen besteht ein in eine Dekompressionsöffnung 12 einer Wand 13 einsetzbares Dekompressionspanel 10 aus einer Sandwichplatte , die von einem Rahmen 11 umfaßt wird. Der Rahmen 11 ist der Dekompressionsöffnung 12 angepaßt und besitzt einen U-förmigen Querschnitt, dessen Schenkel einerseits am Dekompressionspanel 10 und andererseits an der Dekompressionsöffnung anliegen. Sowohl die Dekompressionsöffnung 12 als auch das Dekompressionspanel 10 sind mit je einer umlaufenden Vertiefung 14,15 versehen zur Aufnahme je einer Dichtung 16,17. Diese Dichtungen 16,17 werden von einem Flansch 18 gehalten, der am Rahmen 11, und zwar an den Stirnseiten des U-förmigen Profils befestigt ist. Der Flansch 18 ist in seiner Breite den Vertiefungen 14,15 in der Wand 13 bzw. im Dekompressionspanel 10 angepaßt und durch ein bekanntes Verbindungsverfahren, z.B. Widerstandsschweißen mit dem Rahmen 11 verbunden. Die Länge der Schenkel vom U-förmigen Querschnitt des Rahmens 11 ist der Dicke der Wand 13 bzw. des Dekompressionspanels 10 angepaßt. Zum Halten des Rahmens 11 und des Dekompressionspanels 10 in der Dekompressions 12 sind mehrere gleichmäßig verteilte Haltefedern 19 vorgesehen. Diese Haltefedern sind wie auch in Fig. 2a/b zu sehen Flachfedern mit T-förmiger Konfiguration, deren Stegenden trogförmig ausgebildet sind. Die Haltefedern 19 liegen mit den Rücken der trogförmigen Enden an der Wand 13 bzw. am Dekompressionspanel und klemmen diese ein. Nach dem Einsetzen des Rahmens und des Dekompressionspanels 10 einschließlich der Dichtungen 16,17 werden die Haltefedern 19 am Rahmen mit Blindnieten 20 befestigt. Es handelt sich dabei um Blindniete mit Universalkopf für eine allgemeine Anwendung mit Nietdornsicherung. Dieses Befestigungsmittel stellt ein einfaches preisgünstiges aber sicheres Befestigungselement dar.

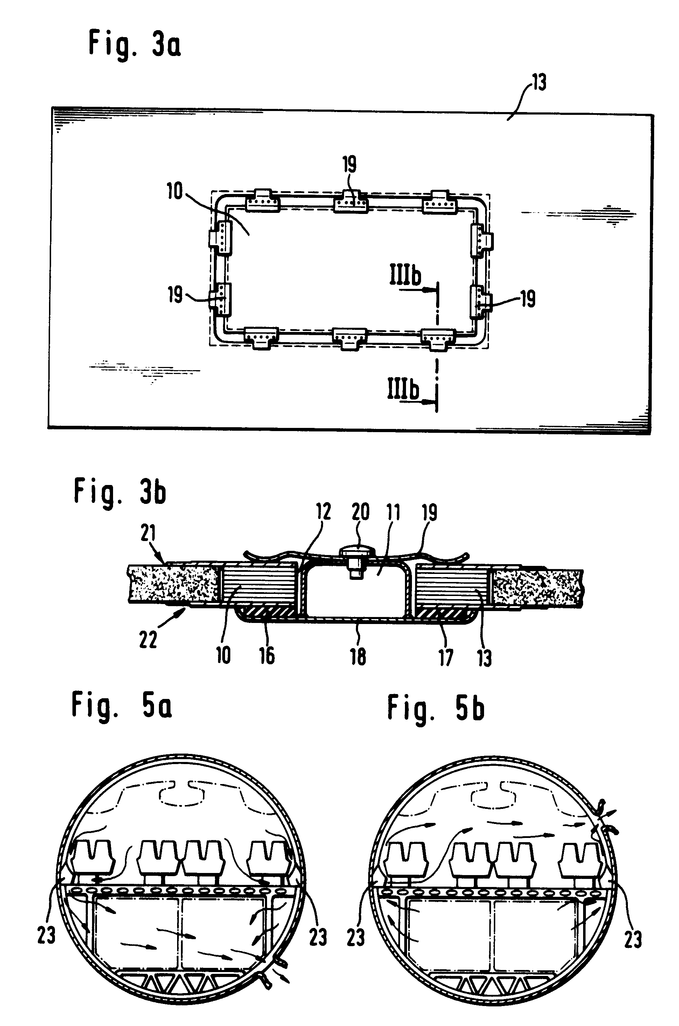

In den Haltefedern 19 sind Sollbruchstellen, und zwar an der Einspannstelle vorgesehen, die bei einer explosiven Dekompression brechen. Da eine Dekompression in zwei Richtungen, wie durch die Pfeile 21,22 angedeutet, auftreten kann, siehe auch Fig. 5a/b müssen die Haltefedern zwei Sollbruchstellen aufweisen. Bei einer Dekompression vom Passagierraum zum Frachtraum gemäß Fig. 5 a spricht man von einer "blow-in" Dekompression. In diesem Fall wirkt die Dekompression in Richtung des Pfeiles 21 gemäß Fig. 1b, mit der Folge, daß die Sollbruchstellen im schmaleren Steg der T-förmigen Haltefedern 19 brechen und das Panel 10 mit dem Rahmen 11 aus der Dekompressionsöffnung gedrückt wird. Mit der Breite des schmaleren Steges der Haltefedern 19 wird daher ein definierter Differenzdruckbereich zum Ansprechen des Dekompressionspanels bestimmt.

Bei einer Dekompression vom Frachtraum zum Passagierraum spricht man von einer "blow-out" Dekompression. Hierbei wirkt die Dekompression in Richtung des Pfeiles 22, wobei die Sollbruchstellen im breiteren Steg der T-förmigen Haltefedern brechen, so daß nur das Dekompressionspanel herausgedrückt wird. Die "blow-out" Dekompression ist in Fig. 5b dargestellt. Beide Darstellungen nach Fig.5a/b zeigen einen Schnitt durch einen Rumpf eines Passagierflugzeuges mit Unterflurfrachtraum. In einem derartigen Flugzeug sind auch Sicherheitseinrichtungen 23 gemäß DBP 30 11 109 eingesetzt, welche bei einer explosiven Dekompression ebenfalls ansprechen.

Neben dem Ausführungsbeispiel nach Fig. 1, ist es auch möglich das Abdichten mit der Lösung gemäß dem Ausführungsbeispiel nach Fig. 3 vorzunehemen. Bei diesem Ausführungsbeispiel sind die Schenkel vom U-förmigen Rahmen etwa um die Dicke der Dichtungen länger ausgebildet und die Randbereiche des Flansches 18 zum Halten der Dichtungen abgewinkelt. Außerdem sind hier T-förmige Haltefedern 19 , siehe auch Fig. 4a/b, mit breiteren Stegen eingesetzt, welche gegenüber dem Ausführungsbeispiel nach Fig. 1 nicht drei Blindniete sonder vier Blindniete zur Befestigung verlangen. Die Wirkungsweise dieses Ausführungsbeispieles entspricht dem nach Fig. 1, jedoch mit anderen definierten Differenzdruckbereichen aufgrund der breiteren Stege der Haltefedern 19. Der Flansch 18 kann sowohl bei diesem Ausführungsbeispiel als auch bei dem Ausführungsbeispiel nach Fig. 1 durch Umbiegen der Schenkel des einen U-förmigen Querschnitt aufweisenden Rahmen 11 gebildet werden.

**Patentansprüche**

1. Dekompressionspanel für Zwischenwände und/oder Zwischenböden von Passagier- und Fracträume aufweisenden Luftfahrzeugen, bestehend aus einer mit einer Dichtung in eine Dekompressionsöffnung einsetzbaren Sandwichplatte und mehreren gleichmäßig verteilten Halte- und Klemmvorrichtungen, dadurch gekennzeichnet, daß das Dekompressionspanel (10) in einen Rahmen (11) eingesetzt ist, der auf einer Seite einen Flansch (18) aufweist, daß der Flansch (18) mit Dichtungen (16,17) sowohl am Dekompressionspanel (10) als auch an der Wand- oder Bodenplatte (13) in einer die Dichtungen (16, 17) schützenden Weise anliegt, und daß an der anderen Seite des Rahmens (11) mehrere das Dekompressinspanel (10) und die Wand- oder Bodenplatte (13) übergreifende Haltefedern (19) mit Sollbruchstellen angebracht sind.

2. Dekompressionspanel nach Anspruch 1, dadurch gekennzeichnet, daß die Wand- oder Bodenplatte (13) bzw. das Dekompressionspanel (10) je eine Vertiefung (14,15) aufweisen, deren Breite und Tiefe der aufzunehmenden Dichtung (16,17) und dem den Rahmen (11) übergreifenden Flansch (18) angepaßt sind.

3. Dekompressionspanel nach Anspruch 1, dadurch gekennzeichnet, daß der Flansch (18) an seinen übergreifenden Rändern zum Halten der Dichtungen (16,17) abgewinkelt ist.

4. Dekompressionspanel nach einem der Ansprüche 1 bis 3, dadurch gekennzeichnet, daß die Haltefedern (19) als mit dem Rahmen (11) verbindbare Flachfedern ausgebildet sind, deren das Dekompressionspanel (10) übergreifender Steg breiter ist als der die Wand- oder Bodenplatte (13) übergreifende Steg.

5. Dekompressionspanel nach einem der Ansprüche 1 bis 4, dadurch gekennzeichnet, daß in den Stegen der Haltefedern (19) die Sollbruchstellen vorgesehen sind, und daß die Stegbreiten durch die Ansprechdrücke des Dekompressionspanels (10) bestimmt sind.

6. Dekompressionspanel nach einem der Ansprüche 1 bis 5, dadurch gekennzeichnet, daß der Rahmen (11) einen U-förmigen Querschnitt aufweist, an dessen Schenkeln der Flansch (18) und an dessen Quersteg die Haltefedern (19) befestigt sind.

7. Dekompressionspanel nach einem der Ansprüche 1 bis 6, dadurch gekennzeichnet, daß der Flansch (18) durch Umformen der Schenkel des U-förmigen Rahmens (11) gebildet ist.

## Claims

1. A decompression panel for the partition walls and/or partition floors of an aircraft with passenger and freight compartments consisting of a sandwich plate with a seals which can be inserted in a decompression aperture and several evenly spaced retaining and clamping devices, characterised in that the decompression panel (10) is placed in a frame (11), which has a flange (18) on one side, in that the flange (18) together with seals (16, 17) abut both the decompression panel (10) and the wall/floor plate (13) in a way which protects the seals (16, 17) and in that fitted to the other side of the frame (11) are several retaining springs (19), with pressure-relief points and these springs extend over the decompression panel (10) and the wall/floor plate (13).

2. A decompression panel, as claimed in claim 1, characterised in that the wall/floor plate (13) and the decompression panel (10) both have a depression (14, 15), whose width and depth match both the seals (16, 17) to be accommodated and the flange (18) which extends over the frame (11).

3. A decompression panel, as claimed in claim 1, characterised in that the overlapping edges of the flange (18) are curved to retain the seals (16, 17).

4. A decompression panel, as claimed in one of the claims 1 - 3, characterised in that the retaining springs (19) are designed as leaf springs which can be connected to the frame (11), whereby the section extending over the decompression panel (10) is wider than the section extending over the wall/floor plate (13).

5. A decompression panel, as claimed in one of the claims 1 - 4, characterised in that pressure-relief points are provided in the sections of the retaining springs (19) and in that the width of these sections is determined by the response pressures of the decompression panel (10).

6. A decompression panel, as claimed in one of the claims 1 - 5, characterised in that the frame (11) has a U-shaped cross section, whose arms are secured to the flange (18) and whose crosspiece is secured to the retaining springs (19).

7. A decompression panel, as claimed in one of the claims 1 - 6, characterised in that the flange (18) is formed by a shaping of the arms of the U-shaped frame (11).

## Revendications

1. Panneau de décompression pour les cloisons et/ou les planchers d'avions comportant une cabine de passagers et une soute, panneau composé d'une plaque sandwich qui se place avec un joint dans une ouverture de décompression et comporte plusieurs dispositifs de fixation et de serrage répartis régulièrement, panneau de décompression (10) caractérisé en ce qu'il est placé dans un châssis (11) qui comporte d'un côté une bride (18) s'appliquant avec des joints d'étanchéité (16, 17) à la fois contre le panneau de décompression (10) et contre la plaque de paroi ou de plancher (13) d'une manière qui protège les joints (16, 17) et en ce que sur l'autre face du châssis (11), se trouvent plusieurs ressorts de fixation (19) à points de rupture de consigne qui dépassent du panneau de décompression (10) et de la plaque de paroi ou de plancher (13).

2.  Panneau de décompression selon la revendication 1, caractérisé en ce que la plaque de paroi ou de plancher (13) ou le panneau de décompression (10) comporte chacun une gorge (14, 15) dont la largeur et la profondeur sont adaptées au joint d'étanchéité (16, 17) qu'elles sont destinées à recevoir ainsi qu'à la bride (18) qui dépasse du châssis (11).

3.  Panneau de décompression selon la revendication 1, caractérisé en ce que les bords de la bride qui débordent sont recourbés pour tenir les joints d'étanchéité (16, 17).

4.  Panneau de décompression selon l'une des revendications 1 a 3, caractérisé en ce que les ressorts de fixation (19) sont des ressorts-lames qui peuvent être reliés au châssis (11) et dont l'aile qui dépasse du panneau de décompression (10) est plus large que l'aile qui dépasse de la plaque de paroi ou de plancher (13).

5.  Panneau de décompression selon l'une des revendications 1 à 4, caractérisé par des points de rupture de consigne dans les ailes des ressorts de fixation (19) et en ce que la largeur des ailes est définie par les pressions de mise en oeuvre du panneau de décompression.

6.  Panneau de décompression selon l'une des revendications 1 à 5, caractérisé en ce que le châssis (11) présente une section en forme de U sur laquelle sont fixées les branches de la bride (18), les ressorts de fixation (19) étant fixés sur son âme.

7.  Panneau de décompression selon l'une des revendications 1 à 6, caractérisé en ce que la bride (18) est formée par pliage des branches du châssis (11) à section en forme de U.

Fig. 1a

Fig. 1b

Fig. 4a

Fig. 2a

Fig. 4b

Fig. 2b

## Fig. 3a

## Fig. 3b

## Fig. 5a

## Fig. 5b